# EUROPEAN PATENT APPLICATION

(11) **EP 4 195 310 A1**
(43) Date of publication of application: **14.06.2023**
(21) Application number: 22825160.9
(22) Date of filing: 19.05.2022
(51) Int. Cl.: H01M 4/13, H01M 4/36, H01M 4/38, H01M 4/62, H01M 10/052, H01M 4/02

(54) **POSITIVE ELECTRODE FOR LITHIUM-SULFUR BATTERY AND LITHIUM-SULFUR BATTERY COMPRISING SAME**

(30) Priority: 15.06.2021 KR 20210077210
(71) Applicant: LG Energy Solution, Ltd., Seoul 07335 (KR)
(72) Inventor: KANG, Da Young, Daejeon 34122 (KR); LEE, Changhoon, Daejeon 34122 (KR)
(74) Representative: Goddar, Heinz J.
(86) International application number: PCT/KR2022/007156
(87) International publication number: WO 2022/265234

(57) **Abstract**

The present invention relates to a positive electrode for a lithium-sulfur battery comprising two kinds of sulfur-carbon composite including carbon materials having different shapes and properties as a positive electrode active material, and a lithium-sulfur battery comprising the same.

The positive electrode for the lithium-sulfur battery according to the present invention exhibits low porosity and excellent surface uniformity to improve the electrochemical reactivity and stability of the positive electrode, thereby maximizing the expression of the capacity of the positive electrode, and thus enabling high capacity, high energy density, and long lifetime of the lithium-sulfur battery.

## Description

### [Technical Field]

The present invention relates to a positive electrode for a lithium-sulfur battery and a lithium-sulfur battery comprising the same.

The present application claims the benefit of priority based on Korean Patent Application No. 10-2021-0077210 filed on June 15, 2021, the entire contents of which are incorporated herein by reference.

### [Background Art]

As the utilization range of lithium secondary batteries is expanded not only to portable electronic devices and communication devices, but also to electric vehicles (EV) and electric storage systems (ESS), the demand for high capacity of lithium secondary batteries used as their power sources is increasing.

The lithium-sulfur battery among various lithium secondary batteries is a battery system using a sulfur-based material having an S-S bond (sulfur-sulfur bond) as a positive electrode active material and using lithium metal, a carbon-based material in which intercalation/deintercalation of lithium ions occurs, or silicon or tin that forms an alloy with lithium as a negative electrode active material.

There is an advantage that sulfur, which is the main material of the positive electrode active material in the lithium-sulfur battery, has a low atomic weight, is rich in resources and thus easy to supply and receive, and is a cheap, non-toxic and environmentally friendly material.

In addition, the lithium-sulfur battery has a theoretical discharging capacity of 1,675 mAh/g derived from a conversion reaction of lithium ion and sulfur (S₈ + 16Li⁺ + 16e⁻ → 8Li₂S) in the positive electrode, and when using lithium metal (theoretical capacity: 3,860 mAh/g) as a negative electrode, has a theoretical energy density of 2,600 Wh/kg. Since the theoretical energy density of the lithium-sulfur battery is much higher than the theoretical energy density of other battery systems currently under study (Ni-MH battery: 450Wh/kg, Li-FeS battery: 480 Wh/kg, Li-MnO₂ battery: 1,000Wh/kg, Na-S battery: 800 Wh/kg) and the lithium secondary battery (250 Wh/kg), the lithium-sulfur battery is attracting attention as a high-capacity, eco-friendly and low-cost lithium secondary battery among secondary batteries that have been developed to date, and is a next-generation battery system to which several studies are being conducted.

In this lithium-sulfur battery, since sulfur, which is used as a positive electrode active material, has an electrical conductivity of 5 × 10⁻³⁰ S/cm and thus is a non-conductor without electrical conductivity, there is a problem that it is difficult to move electrons generated by an electrochemical reaction. Thus, sulfur is used as a sulfur-carbon composite by being complexed with a carbon material that can provide an electrochemical reaction site.

However, along with the leaching problem of lithium polysulfide (Li₂Sₓ, x = 8, 6, 4, 2) generated during the charging/discharging process of the lithium-sulfur battery, there is a problem that the electrochemical reactivity of the sulfur-carbon composite, which is a positive electrode active material, is reduced due to the low electrical conductivity of sulfur, which is a positive electrode active material, and the lithium sulfide (Li₂S), which is a discharging product thereof.

Due to this, the lithium-sulfur battery has a high initial discharging capacity during actual operation, but as cycles are proceeded, the capacity and charging/discharging efficiency characteristics are rapidly decreased, and accordingly, energy density and lifetime characteristics are also reduced, so it is difficult to secure sufficient performance and operational stability, and thus, it has not been commercialized.

In order to realize a lithium-sulfur battery with energy density and lifetime characteristics at a level that can be commercialized, various techniques have been proposed to improve the electrochemical reactivity and stability of the positive electrode, specifically sulfur-carbon composite, which is a positive electrode active material.

As an example, in order to ensure high energy density and long lifetime characteristics, attempts have been made to increase the sulfur content in the positive electrode and at the same time, control the leaching of lithium polysulfide, by using a carbon material with a high specific surface area and high porosity, such as carbon nanotubes, as a support for sulfur.

However, in the case of using a carbon material having a high specific surface area and high porosity as a support for sulfur as described above, since the porosity of the positive electrode is high and the uniformity of the surface is low, there is a problem that a rolling process to improve them is necessarily accompanied. In addition, as the thickness of the positive electrode increases, mass transfer is inhibited and the electrochemical reactivity of the positive electrode is affected, and finally, there is a problem that capacity is decreased. Therefore, there is still a need to develop a lithium-sulfur battery capable of improving the electrochemical reactivity and stability of the positive electrode and thus implementing excellent performance and operational stability.

### [Prior Art Document]

### [Patent Document]

(Patent Document 1) Korean Patent Publication No. 2016-0037084 (April 5, 2016), SURFUR-CARBONNANOTUBE COMPLEX, METHOD OF PREPARING THE SAME, CATHODE ACTIVE MATERIAL FOR LITHIUM-SULFUR BATTERY INCLUDING THE SAME AND LITHIUM-SULFUR BATTERY INCLUDING THE SAME

### [Disclosure]

### [Technical Problem]

Accordingly, the inventors of the present invention have conducted research from various angles to solve the above problems, and as a result, have confirmed that when two types of sulfur-carbon composite each containing carbon materials having different shapes and specific surface areas are used as positive electrode active materials, the porosity and surface uniformity of the positive electrode are improved, so that the positive electrode has improved electrochemical reactivity and stability, thereby completing the present invention.

Accordingly, it an object of the present invention to provide a positive electrode for a lithium-sulfur battery having excellent electrochemical reactivity and stability.

In addition, it is another object of the present invention to provide a lithium-sulfur battery comprising the positive electrode described above.

### [Technical Solution]

In order to achieve the above objects, the present invention provides a positive electrode for a lithium-sulfur battery comprising a positive electrode current collector and a positive electrode active material layer positioned on at least one surface of the positive electrode current collector, wherein the positive electrode active material layer comprises a first sulfur-carbon composite comprising a first carbon material and sulfur, and a second sulfur-carbon composite comprising a second carbon material and sulfur, wherein the first carbon material and the second carbon material have different shapes, wherein the first carbon material has a specific surface area of 200 m²/g to 400 m²/g, and the second carbon material has a specific surface area of 600 m²/g to less than 1000 m²/g.

In addition, the present invention provides a lithium-sulfur battery comprising the positive electrode for the lithium-sulfur battery as described above.

### [Advantageous Effects]

Since the positive electrode for the lithium-sulfur battery according to the present invention comprises, as a positive electrode active material, two types of sulfur-carbon composite each containing carbon materials having different shapes and specific surface areas, and thus exhibits excellent surface uniformity along with low porosity and improves the electrochemical reactivity and stability of the positive electrode, thereby maximizing the capacity expression of the positive electrode and thus realizing a lithium-sulfur battery with high capacity and high energy density.

### [Description of Drawings]

FIG. 1 is a graph showing results of evaluation of capacity characteristics of lithium-sulfur batteries according to Example 1 and Comparative Example 1.
FIG. 2 is a graph showing results of evaluation of capacity characteristics of lithium-sulfur batteries according to Examples 2 and 3 and Comparative Example 1.
FIG. 3 is a graph showing results of evaluation of capacity characteristics of lithium-sulfur batteries according to Comparative Examples 1 and 7.
FIG. 4 is a graph showing results of evaluation of capacity characteristics of lithium-sulfur batteries according to Comparative Examples 1 and 2.
FIG. 5 is a graph showing results of evaluation of capacity characteristics of lithium-sulfur batteries according to Comparative Examples 1 and 3.
FIG. 6 is a graph showing results of evaluation of lifetime characteristics of lithium-sulfur batteries according to Example 1 and Comparative Example 1.
FIG. 7 is a graph showing results of evaluation of lifetime characteristics of lithium-sulfur batteries according to Examples 2 and 3 and Comparative Example 1.
FIG. 8 is a graph showing results of evaluation of lifetime characteristics of lithium-sulfur batteries according to Comparative Examples 1 and 4 to 6.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" include plural referents unless the context clearly dictates otherwise. It is to be understood that the terms "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

The term "composite" as used herein refers to a material that two or more materials are combined to express a more effective function while forming physically and chemically different phases to each other.

The term "polysulfide" used in the present invention has a concept including both "polysulfide ion (Sₓ²⁻, x = 8, 6, 4, 2)" and "lithium polysulfide (Li₂Sₓ or LiSₓ⁻, x = 8, 6, 4, 2) ".

In the case of the lithium-sulfur battery, there are advantages that the discharging capacity and theoretical energy density are high, and also since sulfur used as a positive electrode active material has abundant reserves and is therefore inexpensive, the manufacturing cost of the battery is low and it is environmentally friendly. Therefore, the lithium-sulfur battery is in the spotlight as a next-generation secondary battery.

Sulfur, which is a positive electrode active material in the lithium-sulfur battery, is a non-conductor and thus is used in the form of a sulfur-carbon composite formed by being complexed with a carbon material, which is a conductive material, to supplement the electrical conductivity.

However, in the case of the lithium-sulfur battery, there are problems that the loss of sulfur participating in the electrochemical reaction occurs due to the leaching of lithium polysulfide generated during charging/discharging, and since the electrical conductivity of lithium sulfide, which is a reduced material of sulfur, is very low, the electrochemical reactivity of sulfur-carbon composite, which is a positive electrode active material, is lowered, and as a result, when being actually operated, not only the theoretical discharging capacity and theoretical energy density cannot be fully realized, but also the deterioration of the performance and operational stability of the battery is accelerated. In addition, there are problems that sulfur is converted to lithium sulfide, resulting in volume expansion of about 80%, and thus since the pore volume inside the positive electrode is reduced, it is difficult to contact the electrolyte, and thus the electrochemical reactivity of the positive electrode active material is further reduced.

In order to solve these problems, in the prior art, a method of increasing the loading amount of sulfur or using a carbon material with a high specific surface area as a support for sulfur has been proposed. However, there are problems that the performance of the lithium-sulfur battery has not been effectively improved, and additional processes such as rolling are required to improve the porosity and surface uniformity of the positive electrode, thereby increasing the process cost, and it is difficult to maintain the rolled thickness and roughness due to the swelling phenomenon during the impregnation of the electrolyte solution.

Therefore, the present invention provides a positive electrode for a lithium-sulfur battery, which has a low porosity and excellent surface uniformity by incorporating two types of sulfur-carbon composite containing carbon materials with different shapes and physical properties as a positive electrode active material, thereby improving the electrochemical reactivity and stability of the positive electrode and thus implementing the lithium-sulfur battery with improved capacity and lifetime characteristics.

Specifically, the positive electrode for the lithium-sulfur battery according to the present invention comprises a positive electrode current collector and a positive electrode active material layer located on at least one surface of the positive electrode current collector, wherein the positive electrode active material layer comprises a first sulfur-carbon composite containing a first carbon material and sulfur, and a second sulfur-carbon composite containing a second carbon material and sulfur, and at this time, the first carbon material and the second carbon material have different specific surface areas as well as different shapes from each other.

In particular, in the present invention, it is possible to simultaneously secure low porosity and improved surface uniformity characteristics, as compared to the existing positive electrode, by incorporating two types of sulfur-carbon composite, each containing the first carbon material and the second carbon material with different shapes and specific surface areas as a support for sulfur. In the present invention, the porosity is defined as the initial porosity measured immediately after the positive electrode is manufactured, and it can be measured by a conventional method such as a gas adsorption method, a mercury injection method, and an optical microscopy method such as a transmission electron microscopy method and a scanning electron microscopy method. Specifically, although the positive electrode for the lithium-sulfur battery according to the present invention has a dense structure due to low porosity, since it has a structure that can improve the utilization rate of sulfur during electrochemical reaction by using two types of sulfur-carbon composites each containing carbon materials with different shapes and specific surface areas as positive electrode active materials, thereby minimizing the increase in resistance in the positive electrode, excellent electrochemical reactivity can be exhibited. In addition, through this, not only the capacity and lifetime characteristics of the lithium-sulfur battery are improved, but also optimal charging/discharging performance appears even if the loss or volume change of sulfur occurs during charging/discharging. In addition, as described above, the positive electrode for the lithium-sulfur battery according to the present invention comprising two kinds of sulfur-carbon composite is structurally stable by having excellent surface uniformity, and thus the operational stability is improved when introduced into the battery, and a separate rolling process is not required when manufacturing the positive electrode, so the manufacturing process is easy and can be simplified.

In the present invention, the positive electrode may comprise a positive electrode current collector and a positive electrode active material layer coated on one or both sides of the positive electrode current collector.

The positive electrode current collector supports the positive electrode active material and is not particularly limited as long as it has high conductivity without causing chemical change in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material layer comprises a positive electrode active material and may further comprise an electrically conductive material, a binder, additive and the like.

The positive electrode active material comprises a sulfur-carbon composite comprising a porous carbon material and sulfur on at least a portion of inner and outer surfaces of the porous carbon material. In the case of sulfur contained in the positive electrode active material, since it does not have electrical conductivity alone, it is used in combination with a conductive material such as a carbon material. Accordingly, the sulfur is included in the form of a sulfur-carbon composite, and the positive electrode active material is a sulfur-carbon composite.

The sulfur may include at least one selected from the group consisting of elemental sulfur (S₈) and sulfur compounds. The positive electrode active material may comprise at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2). Preferably, the sulfur may be inorganic sulfur.

The sulfur may be contained in an amount of 60 to 90% by weight, and preferably 65 to 80% by weight, based on 100% by weight of the total positive electrode active material layer. If the content of sulfur in the positive electrode active material layer is less than 60% by weight, there is a limit in increasing the energy density of the battery.

The porous carbon material not only provides a framework to which the afore-mentioned sulfur can be uniformly and stably fixed, but also it compensates for the low electrical conductivity of sulfur so that the electrochemical reaction can be proceeded smoothly.

In the present invention, the positive electrode active material comprises a first sulfur-carbon composite containing a first carbon material and sulfur, and a second sulfur-carbon composite containing a second carbon material and sulfur.

The first and the second carbon materials are porous carbon materials used as a support for sulfur, and can be prepared by carbonizing various carbonaceous precursors. The first and the second carbon materials may comprise uneven pores therein, the average diameter of the pores is in the range of 1 to 200 nm, and the porosity may range from 10 to 90% of the total volume of the carbon material. If the average diameter of the pores is less than the above range, the pore size is only at the molecular level and impregnation with sulfur is impossible. On the contrary, if the average diameter of the pores exceeds the above range, the mechanical strength of the carbon material is weakened, which is not preferable for application to the manufacturing process of the electrode.

Although the shapes of the first and the second carbon materials are different, they are in the forms of sphere, rod, needle, plate, tube, or bulk, and can be used without limitation as long as they are commonly used in a lithium-sulfur battery.

The first and the second carbon materials may be any carbon-based materials having porosity and conductivity, as long as they are commonly used in the art. For example, the first and the second carbon materials may be at least one selected from the group consisting of graphite; graphene; carbon black such as Denka black, acetylene black, Ketjen black, channel black, furnace black, lamp black, and thermal black; carbon nanotube (CNT) such as single-wall carbon nanotube (SWCNT) and multi-wall carbon nanotube (MWCNT); carbon fibers such as graphite nanofiber (GNF), carbon nanofiber (CNF), and activated carbon fiber (ACF); graphite such as natural graphite, artificial graphite, and expanded graphite; and activated carbon. Preferably, the first carbon material may comprise carbon nanotubes, and the second carbon material may comprise carbon black.

The first carbon material may have a specific surface area of 200 m²/g to 400 m²/g, preferably 200 m²/g to 300 m²/g, and more preferably 200 m²/g to 250 m²/g. In this case, the specific surface area was calculated using the Brunauer-Emmett-Teller (BET) equation. If the specific surface area of the first carbon material is less than the above range, the electrochemical reaction area is reduced. On the contrary, if the specific surface area exceeds the above range, there can be problems with the configuration of the positive electrode, due to the high porosity in the positive electrode.

The first carbon material may have an average particle diameter (D₅₀) of 20 *µ*m to 70 *µ*m, and preferably 40 *µ*m to 60 *µ*m. At this time, the average particle diameter (D₅₀) means the particle diameter corresponding to 50% of the volume accumulation in the particle diameter distribution curve of the particles, and for example, may be measured using a laser diffraction method. If the average particle diameter of the first carbon material is less than the above range, the density of the positive electrode is high, and thus the electrochemical reactivity is lowered. On the contrary, if the average particle diameter exceeds the above range, there may be a problem that the porosity of the positive electrode is greatly increased and a pin hole is created.

The second carbon material may have a specific surface area of 600 to less than 1000 m²/g, preferably 600 to 950 m²/g, and more preferably 700 to 850 m²/g. In this case, the specific surface area is the same as described above. If the specific surface area of the second carbon material is less than the above range, the resistance of the positive electrode is greatly increased. On the contrary, if the specific surface area of the second carbon material exceeds the above range, there may be a problem that the lifetime is rapidly reduced due to side reactions with the electrolyte.

The second carbon material may have an average particle diameter (D₅₀) of 10 to 100 µm, and preferably 20 to 40 µm. In this case, the definition and measurement method of the average particle diameter (D₅₀) are the same as described above.

In the first and the second sulfur-carbon composites of the present invention, the sulfur is located in any one of the inner and outer surfaces of each of the first and second carbon materials, and for example, may be present in an area of less than 100%, preferably 1 to 95%, and more preferably 40 to 96% of the entire inner and outer surfaces of the first and second carbon materials. When the sulfur is present on the inner and outer surfaces of each of the first and second carbon materials within the above range, the maximum effect may be exhibited in terms of electron transport area and wettability with electrolyte. Specifically, since the sulfur is thinly and evenly impregnated on the inner and outer surfaces of the first and second carbon materials in the region of the aforementioned range, it is possible to increase the electron transport contact area in the charging/discharging process. If the sulfur is located in 100% of the entire inner and outer surfaces of the first and second carbon materials, since the first and second carbon materials are completely covered with sulfur, the wettability to the electrolyte is lowered and the contact property is lowered, so that they cannot receive electron transfer and thus cannot participate in the electrochemical reactions.

The first and the second sulfur-carbon composites may respectively comprise 65 to 90% by weight, preferably 70 to 85% by weight, and more preferably 72 to 80% by weight of the sulfur, based on 100% by total weight of the first and the second sulfur-carbon composites. If the content of the sulfur is less than the above range, as the content of the first and the second carbon materials in the first and the second sulfur-carbon composites is relatively increased, the specific surface area is increased and the content of the binder is increased when manufacturing the positive electrode. Increasing the amount of use of the binder may eventually increase the sheet resistance of the positive electrode and acts as an insulator preventing electron pass, thereby deteriorating the performance of the battery. On the contrary, if the content of the sulfur exceeds the above-mentioned range, as the sulfur that is not combined with the first and the second carbon materials aggregates with each other or re-leached to the surface of the first and the second carbon materials, it is difficult to receive electrons and thus cannot participate in the electrochemical reaction, resulting in capacity loss of the battery.

The first and the second sulfur-carbon composites may be complexed by simply mixing the sulfur and the first and second carbon materials, or may have a coating form of a core-shell structure or a supported form. The coating form of the core-shell structure is one in which sulfur or any one of the first and second carbon materials is coated with another material, and for example, the surface of the first and the second carbon materials can be covered with sulfur or vice versa. In addition, the supported form may be a form in which sulfur is supported inside the first and the second carbon materials. The form of the sulfur-carbon composite can be used in any form as long as it satisfies the content ratio of the sulfur and the first and the second carbon materials, and the present invention is not limited thereto.

The preparation method of the first and the second sulfur-carbon composites is not particularly limited in the present invention, and a method commonly used in the art may be used. As an example, a method of simply mixing each of the first and the second carbon materials and the sulfur and then heat-treating them to complex them may be used.

In the positive electrode for the lithium-sulfur battery according to the present invention, the positive electrode active material layer may comprise the first sulfur-carbon composite and the second sulfur-carbon composite in a ratio of 90:10 to 50:50, preferably 80:20 to 60:40, more preferably 75:25 to 65:35, and most preferably 75:25 to 70:30. In the present invention, the weight ratio corresponds to the ratio of "wt.% of the first sulfur-carbon composite": "wt.% of the second sulfur-carbon composite". If the weight ratio of the first and the second sulfur-carbon composites falls within the above-mentioned range, it is effective because it can improve the surface uniformity while lowering the porosity of the positive electrode. If the ratio of the first sulfur-carbon composite is increased, there is a problem that the porosity cannot be lowered, and if the ratio of the second sulfur-carbon composite is increased, there is a problem that it is difficult to secure the electrochemical reactivity of the positive electrode.

In addition, the positive electrode for the lithium-sulfur battery of the present invention may contain 50 to 95% by weight, and preferably 70 to 90% by weight of the positive electrode active material comprising the first and the second sulfur-carbon composites as described above, based on 100% by weight of the total weight of the positive electrode active material layer. If the content of the positive electrode active material is less than the above range, the relative content of auxiliary materials such as the electrically conductive material and the binder is increased, and the content of the positive electrode active material is decreased, making it difficult to realize a battery with high capacity and high energy density. On the contrary, if the content of the positive electrode active material exceeds the above range, since the content of the electrically conductive material or the binder is relatively insufficient, there is a problem that the physical properties of the positive electrode are deteriorated.

The positive electrode active material layer of the present invention may further comprise at least one additive selected from a transition metal element, a group III element, a group IV element, a sulfur compound of these elements, and an alloy of these elements and sulfur, in addition to the positive electrode active material.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg or the like, and the group III element may comprise Al, Ga, In, Tl and the like, and the group IV element may comprise Ge, Sn, Pb, and the like.

The positive electrode active material layer may further comprise a binder for well attaching the positive electrode active material described above, or optionally the electrically conductive material, which allows electrons to move smoothly within the positive electrode, and the positive electrode active material, along with the additive described above, to the current collector.

The electrically conductive material is a material that acts as a path, through which electrons are transferred from the current collector to the positive electrode active material, by electrically connecting the current collector and the positive electrode active material. The electrically conductive material can be used without limitation as long as it has electrical conductivity.

For example, as the electrically conductive material, graphite such as natural graphite or artificial graphite; carbon blacks such as Super-P, Denka black, acetylene black, Ketjen black, channel black, furnace black, lamp black, thermal black and carbon black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The electrically conductive material may be contained in an amount of 0.01 to 30% by weight based on 100% by weight of the total weight of the positive electrode active material layer. If the content of the electrically conductive material is less than the above range, electron transfer between the positive electrode active material and the current collector is not easy, so that the voltage and capacity are reduced. On the contrary, if the content of the electrically conductive material exceeds the above range, the proportion of the positive electrode active material is relatively reduced, so that the total energy (charge amount) of the battery can be reduced. Therefore, it is preferable that an appropriate content of the electrically conductive material is determined within the above-mentioned range.

The binder maintains the positive electrode active material on the positive electrode current collector, and organically connects between the positive electrode active materials to increase the bonding force between them, and any binder known in the art may be used.

For example, the binder may be fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxypropylcellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The binder may be contained in an amount of 0.5 to 30% by weight based on 100% by weight of the total weight of the positive electrode active material layer. If the content of the binder is less than the above range, the physical property of the positive electrode is deteriorated, so that the positive electrode active material, the additive, or the electrically conductive material in the positive electrode may be detached. If the content of the binder exceeds the above range, the ratio of the positive electrode active material and the electrically conductive material in the positive electrode is relatively reduced, so that the capacity of the battery may be reduced. Therefore, it is preferable that the content of the binder is determined to be appropriate within the above-mentioned range.

In the present invention, the method for manufacturing the positive electrode for the lithium-sulfur battery is not particularly limited, and methods known by those skilled in the art or various modifications thereof can be used.

For example, the positive electrode for the lithium-sulfur battery may be manufactured by preparing a slurry composition for a positive electrode comprising the above-mentioned components, and then applying it to at least one surface of the positive electrode current collector to form a positive electrode active material layer.

The slurry composition for the positive electrode comprises the positive electrode active material, the additive, the electrically conductive material, and the binder, as described above, and may further comprise a solvent in addition to them.

As the solvent, a solvent capable of uniformly dispersing the positive electrode active material, the additive, the electrically conductive material, and the binder is used. As such a solvent, water is most preferred as an aqueous solvent. At this time, water may be a distilled water or a de-ionized water, but is not necessarily limited thereto, and if necessary, a lower alcohol which can be easily mixed with water may be used. Examples of the lower alcohol comprise methanol, ethanol, propanol, isopropanol, and butanol, and they may be preferably used in mixture with water.

The content of the solvent may be at a level of having such a concentration as to facilitate the coating, and the specific content varies depending on the coating method and apparatus.

The slurry composition for the positive electrode may additionally comprise, if necessary, a material commonly used for the purpose of improving its function in the relevant technical field. For example, a viscosity adjusting agent, a fluidizing agent, a filler, etc. may be mentioned.

The method of applying the slurry composition for the positive electrode is not particularly limited in the present invention, and for example, methods such as doctor blade, die casting, comma coating, and screen printing may be mentioned. In addition, after molding on a separate substrate, the slurry for the positive electrode may be applied on the positive electrode current collector by pressing or lamination.

After the application, a drying process for removing the solvent may be performed. The drying process is carried out at a temperature and time at a level capable of sufficiently removing the solvent, and the conditions may vary depending on the type of solvent, and thus are not particularly limited in the present invention. As an example, a drying method by warm air, hot air, or low-humidity air, a vacuum drying method, and a drying method by irradiation with (far)-infrared radiation or electron beam may be mentioned. The drying speed is adjusted so that the solvent can be removed as quickly as possible within the range of speed that does not cause cracks in the positive electrode active material layer due to normal stress concentration or within the range of speed at which the positive electrode active material layer does not peel off from the positive electrode current collector.

The porosity of the positive electrode, specifically, the positive electrode active material layer, prepared by the above-described components and manufacturing method may be 72% or less, and preferably 68 to 72%, based on the total volume of the positive electrode active material layer. In general, as the porosity of the positive electrode is increased, a path that can contain electrolyte is created, which is advantageous for improving the electrochemical reactivity of the positive electrode. However, in terms of actual operation of the battery, if the porosity of the positive electrode is high, since the amount of electrolyte required increases, there is a limit to the energy density per weight, and thus it is desirable to keep it at a level of 72% or less. As described above, in the present invention, the porosity is the initial porosity measured immediately after the positive electrode is manufactured, and the positive electrode according to the present invention can secure desirable porosity without the addition of a separate rolling process, and thus it has advantages that the manufacturing process is simple, efficient, and economical.

If the porosity of the positive electrode does not reach the lower limit described above, the filling degree of the positive electrode active material layer becomes too high, and thus there is a problem that since sufficient electrolyte cannot be maintained between the positive electrode active materials, the capacity or lifetime characteristics of the battery may be deteriorated, and the overvoltage and discharging capacity of the battery may be severely reduced. On the contrary, if the porosity of the positive electrode exceeds the upper limit described above and thus has an excessively high porosity, the physical and electrical connection with the positive electrode current collector is lowered, the adhesion is lowered, the reaction becomes difficult, and the energy density of the battery can be lowered.

In addition, the positive electrode active material layer may have a surface characteristic in which the arithmetic mean roughness (Sa) is defined to be 5 gm or less and the maximum height roughness (Sz) is defined to be 60 gm or less. In this case, the arithmetic mean roughness (Sa) is the average absolute value of the difference in height to each point with respect to the average surface of the surface, and the maximum height roughness (Sz) is the maximum height roughness of a surface, and means the distance between the highest point and the lowest point in a single surface. The positive electrode active material layer has an optimal surface roughness as a positive electrode by satisfying the arithmetic mean roughness (Sa) and the maximum height roughness (Sz) as described above. The positive electrode active material layer has an optimal surface roughness as a positive electrode, thereby improving the surface uniformity of the positive electrode, so it can exhibit excellent operational stability when applied to a battery.

In the present invention, the positive electrode active material layer may have an arithmetic mean roughness (Sa) of 5 gm or less, preferably 3 to 4.8 gm, and more preferably 3.5 to 4.5 gm. The positive electrode active material layer may have a maximum height roughness (Sz) of 60 gm or less, preferably 30 to 55 gm, and more preferably 40 to 50 gm. If the arithmetic mean roughness (Sa) and the maximum height roughness (Sz) of the positive electrode active material layer satisfy the above ranges, the positive electrode exhibits excellent surface uniformity, which can be advantageous in securing the operational stability of the battery. On the contrary, if the arithmetic mean roughness (Sa) and the maximum height roughness (Sz) of the positive electrode active material layer are out of the above ranges, there may be a problem that it causes an unstable reaction on the surface of the lithium metal, which is the counter electrode, and reduces the lifetime of the battery.

In addition, the present invention provides a lithium-sulfur battery including the positive electrode for the lithium-sulfur battery.

The lithium-sulfur battery comprises a positive electrode; a negative electrode; and an electrolyte interposed therebetween, wherein the positive electrode comprises the positive electrode for the lithium-sulfur battery according to the present invention.

The positive electrode is according to the present invention, as described above.

The negative electrode may comprise a negative electrode current collector and a negative electrode active material layer coated on one or both surfaces of the negative electrode current collector. In addition, the negative electrode may be a lithium metal plate.

The negative electrode current collector is for supporting the negative electrode active material layer, and is the same as described for the positive electrode current collector.

The negative electrode active material layer comprises a negative electrode active material, and may optionally further comprise an electrically conductive material, a binder, and the like, wherein the electrically conductive material and the binder are as described above.

The negative electrode active material may comprise a material capable of reversibly intercalating or deintercalating lithium ion (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

The method of manufacturing the negative electrode is not particularly limited, and a method of forming a layer or film commonly used in the art may be used. For example, a method such as compression, coating, or deposition may be used. In addition, a case, in which a thin film of metallic lithium is formed on a metal plate by initial charging after assembling a battery without a lithium thin film on the current collector, is also comprised in the negative electrode of the present invention.

The electrolyte is located between the positive electrode and the negative electrode as described above to cause an electrochemical oxidation or reduction reaction in the positive electrode and the negative electrode through it, and comprises a lithium salt and a non-aqueous organic solvent.

The lithium salt may be used without limitation as long as it can be commonly used in a lithium secondary battery.

Specific examples of the lithium salt may be at least one from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂ (lithium bis (trifluoromethanesulfonyl)imide; LiTFSI), LiN(C₂F₅SO₂)₂, LiN(SO₂F)₂(lithium bis(fluorosulfonyl)imide; LiFSI), and lithium lower aliphatic carboxylate.

The concentration of the lithium salt may be 0.2 to 4 M, specifically 0.6 to 2 M, and more specifically 0.7 to 1.7 M depending on various factors such as the composition of the electrolyte, the solubility of the lithium salt, the conductivity of the dissolved salt, the charging and discharging conditions of the battery, the operating temperature, and other factors known in the lithium secondary battery field. If the concentration of the lithium salt is less than 0.2 M, the conductivity of the electrolyte may be lowered and thus the performance of the electrolyte may be deteriorated. If the concentration of the lithium salt exceeds 4 M, the viscosity of the electrolyte may increase and thus the mobility of the lithium ion may be reduced.

As the non-aqueous organic solvent, those conventionally used in an electrolyte for a lithium secondary battery may be used without limitation. For example, the organic solvent may comprise ether, ester, amide, linear carbonate, cyclic carbonate, etc. alone or in combination of two or more thereof. Among them, representatively, ether-based compounds may be comprised.

As an example, the ether-based compound may be, but is not limited to, at least one selected from the group consisting of dimethyl ether, diethyl ether, dipropyl ether, methylethyl ether, methylpropyl ether, ethylpropyl ether, dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, polyethylene glycol methylethyl ether, 1,3-dioxolane, tetrahydrofuran, and 2-methyltetrahydrofuran.

Examples of the ester of the organic solvent may comprise, but is not limited to, at least one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively comprise, but is not limited to, at least one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may comprise any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides comprise, but are not limited to, fluoroethylene carbonate (FEC) and the like.

In addition, in addition to the above-mentioned organic solvent, it comprises at least one selected from the group consisting of N-methylpyrrolidone, dimethyl sulfoxide, sulfolane furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene.

The electrolyte may further comprise nitric acid-based compounds commonly used in the related art in addition to the above-mentioned components. Examples thereof may comprise lithium nitrate (LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), cesium nitrite (CsNO₂) and the like.

The injection of the electrolyte can be performed at an appropriate stage during the manufacturing process of the battery, depending on the manufacturing process and the required properties of the final product. That is, the injection can be applied before the assembly of the battery or at the final stage of the assembly of the battery.

A separator may be additionally comprised between the positive electrode and the negative electrode.

The separator separates or insulates the positive electrode and the negative electrode from each other and enables lithium ions to be transported between the positive electrode and the negative electrode, and may be made of a porous non-conductive or insulating material. The separator may be used without particular limitation as long as it is used as a separator in a typical lithium secondary battery. The separator may be an independent member such as a film or a coating layer added to the positive electrode and/or the negative electrode.

As the separator, a separator with excellent impregnating ability for the electrolyte along with low resistance to ion migration in the electrolyte is preferable.

The separator may be made of a porous substrate. Any of the porous substrates can be used as long as it is a porous substrate commonly used in a secondary battery. A porous polymer film may be used alone or in the form of a laminate. For example, a non-woven fabric made of high melting point glass fibers, or polyethylene terephthalate fibers, etc. or a polyolefin-based porous membrane may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 gm, and preferably 5 to 50 gm. Although the thickness range of the porous substrate is not particularly limited to the above-mentioned range, if the thickness is excessively thinner than the lower limit described above, mechanical properties are deteriorated and thus the separator may be easily damaged during use of the battery.

The average diameter and porosity of the pores present in the porous substrate are also not particularly limited, but may be 0.001 to 50 gm and 10 to 95%, respectively.

The lithium-sulfur battery of the present invention can be classified into cylindrical, rectangular, coin-shaped, pouch type and the like depending on the type, and can be divided into bulk type and thin film type depending on the size. The structure and preparation method of these batteries are well known in the art, and thus detailed description thereof is omitted.

Also, the present invention provides a battery module comprising the lithium-sulfur battery described above as a unit battery.

The battery module may be used as a power source for medium- to large-sized devices requiring high temperature stability, long cycle characteristics, high-capacity characteristics, and the like.

Examples of the medium- to large-sized devices may comprise, but are not limited to, a power tool that is powered by a battery powered motor; electric cars comprising an electric vehicle (EV), a hybrid electric vehicle (HEV), a plug-in hybrid electric vehicle (PHEV), and the like; an electric two-wheeled vehicle comprising an electric bike (E-bike) and an electric scooter (E-scooter); an electric golf cart; and a power storage system.

### PREFERRED MODE FOR CARRYING OUT THE INVENTION

Hereinafter, preferred examples of the present invention will be described in order to facilitate understanding of the present invention. It will be apparent to those skilled in the art, however, that the following examples are illustrative of the present invention and that various changes and modifications can be made within the scope and spirit of the present invention. Such variations and modifications are within the scope of the appended claims.

### Example and Comparative Example

### [Example 1]

### (1) Preparation of sulfur-carbon composite

Carbon nanotubes having a specific surface area of 220 m²/g and an average particle diameter (D₅₀) of 50 *µ*m, as a first carbon material, and sulfur were evenly mixed in a weight ratio of 25:75, and then reacted in an oven at 155 °C for 30 minutes to prepare a first sulfur-carbon composite.

Carbon black having a specific surface area of 680 m²/g, as a second carbon material, and sulfur were evenly mixed in a weight ratio of 25:75, and then, reacted in an oven at 155 °C for 30 minutes to prepare a second sulfur-carbon composite.

### (2) Manufacture of lithium-sulfur battery

90 wt.% of sulfur-carbon composite containing the first sulfur-carbon composite and the second sulfur-carbon composite prepared above in a weight ratio of 7:3 as a positive electrode active material, 5 wt.% of Denka Black as an electrically conductive material and 5 wt.% of styrenebutadiene rubber/carboxymethylcellulose (SBR:CMC=7:3, weight ratio) as a binder were mixed to prepare a slurry composition for a positive electrode.

The slurry composition for the positive electrode thus prepared was applied to a thickness of 250 *µ*m on an aluminum foil having a thickness of 20 *µ*m, and then dried at 50°C for 12 hours to prepare a positive electrode.

The prepared positive electrode and the lithium metal negative electrode having a thickness of 40 µm were positioned to face each other, and then a separator was interposed between them, and 70 *µ*ℓ of electrolyte was injected to prepare a lithium-sulfur battery.

In this case, polyethylene having a thickness of 16 *µ*m and a porosity of 46% was used as the separator, and a mixture obtained by dissolving 0.75 M concentration of LiFSI and 3 wt.% lithium nitrate in an organic solvent, which was obtained by mixing 2-methylfuran and dimethoxyethane in a volume ratio of 33:77, was used as the electrolyte.

### [Example 2]

A lithium-sulfur battery was prepared in the same manner as in Example 1 above, except that when preparing the slurry composition for the positive electrode, the weight ratio of the first sulfur-carbon composite and the second sulfur-carbon composite as a positive electrode active material is changed to a weight ratio of 5:5.

### [Example 3]

A lithium-sulfur battery was prepared in the same manner as in Example 1 above, except that when preparing the slurry composition for the positive electrode, the weight ratio of the first sulfur-carbon composite and the second sulfur-carbon composite as a positive electrode active material is changed to a weight ratio of 2:8.

### [Comparative Example 1]

A lithium-sulfur battery was prepared in the same manner as in Example 1 above, except that when preparing the slurry composition for the positive electrode, only the first sulfur-carbon composite is used as a positive electrode active material.

### [Comparative Example 2]

Carbon nanotubes having a specific surface area of 220 m²/g and an average particle diameter (D₅₀) of 10 gm through a ball mill process, and sulfur were evenly mixed in a weight ratio of 25:75, and then reacted in an oven at 155°C for 30 minutes to prepare a sulfur-carbon composite.

A lithium-sulfur battery was prepared in the same manner as in Example 1 above, except that when preparing the slurry composition for the positive electrode, only the sulfur-carbon composite prepared above is used as a positive electrode active material.

### [Comparative Example 3]

A lithium-sulfur battery was prepared in the same manner as in Example 1 above, except that when preparing the slurry composition for the positive electrode, only the second sulfur-carbon composite is used as a positive electrode active material.

### [Comparative Example 4]

Carbon black having a specific surface area of 1400 m²/g as the second carbon material, and sulfur were evenly mixed in a weight ratio of 25:75, and then reacted in an oven at 155°C for 30 minutes to prepare a second sulfur-carbon composite.

A lithium-sulfur battery was prepared in the same manner as in Example 1 above, except that when preparing the slurry composition for the positive electrode, the second sulfur-carbon composite prepared above is used as the second sulfur-carbon composite comprised in the positive electrode active material.

### [Comparative Example 5]

Carbon nanotubes having a specific surface area of 170 m²/g and an average particle diameter (D₅₀) of 30 gm as the first carbon material, and sulfur were evenly mixed in a weight ratio of 25:75, and then reacted in an oven at 155°C for 30 minutes to prepare a first sulfur-carbon composite.

Carbon black having a specific surface area of 1400 m²/g as a second carbon material, and sulfur were evenly mixed in a weight ratio of 25:75, and then reacted in an oven at 155°C for 30 minutes to prepare a second sulfur-carbon composite.

A lithium-sulfur battery was prepared in the same manner as in Example 1 above, except that when preparing the slurry composition for the positive electrode, the first and the second sulfur-carbon composite prepared above are used as a positive electrode active material.

### [Comparative Example 6]

Carbon nanotubes having a specific surface area of 170 m²/g and an average particle diameter (D₅₀) of 30 gm as the first carbon material, and sulfur were evenly mixed in a weight ratio of 25:75, and then reacted in an oven at 155°C for 30 minutes to prepare a first sulfur-carbon composite.

A lithium-sulfur battery was prepared in the same manner as in Example 1 above, except that when preparing the slurry composition for the positive electrode, the first sulfur-carbon composite prepared above is used as the first sulfur-carbon composite comprised in the positive electrode active material.

### [Comparative Example 7]

Carbon black having a specific surface area of 300 m²/g as a second carbon material, and sulfur were evenly mixed in a weight ratio of 25:75, and then reacted in an oven at 155°C for 30 minutes to prepare a second sulfur-carbon composite.

A lithium-sulfur battery was prepared in the same manner as in Example 1 above, except that when preparing the slurry composition for the positive electrode, the second sulfur-carbon composite prepared above is used as the second sulfur-carbon composite comprised in the positive electrode active material.

### Experimental Example 1. Evaluation of porosity and surface roughness of positive electrode

The porosity and surface roughness of positive electrodes prepared by Examples and Comparative Examples were measured.

Specifically, in order to measure the porosity of the positive electrode, the amount of nitrogen adsorption and desorption was measured using a specific surface area measuring device (Model name: BELSORP-MINI, Manufacturer: BEL Japan Inc.) under vacuum. Through this, an isothermal adsorption/desorption curve was obtained, and the specific surface area was calculated using the Brunaure-Emmett-Teller (BET) equation. In addition, the surface roughness of the positive electrode was measured using a laser roughness meter (Model name: VK-X150, Manufacturer: KEYENCE). The results obtained at this time are shown in Table 1.

**Table 1:**

| | Porosity (%) | Surface roughness (*µ*m) | |
|---|---|---|---|
| | | Arithmetic mean roughness (Sa) | Maximum height roughness (Sz) |
| Example 1 | 71 | 4.26 | 46.89 |
| Example 2 | 66 | - | - |
| Example 3 | 60 | - | - |
| Comparative Example 1 | 78 | 10.04 | 109.6 |
| Comparative Example 2 | 72 | 8.83 | 73.05 |
| Comparative Example 3 | 70 | - | - |
| Comparative Example 4 | 73 | 5.6 | 64.92 |
| Comparative | 75 | 11.78 | 108.3 |
| Example 5 | | | |
| Comparative Example 6 | 78 | 7.09 | 74.59 |
| Comparative Example 7 | 72 | - | - |

Referring to Table 1 above, in the case of the positive electrodes according to Examples, the initial porosity measured immediately after the preparation of the positive electrode was 72% or less, whereas in the case of the positive electrodes according to Comparative Examples 1 and 4 to 6, the initial porosity measured immediately after the positive electrode was manufactured exceeds 72%. Accordingly, in the case of the positive electrode according to Comparative Examples, separate rolling processes were additionally performed before introducing into the battery, so that the porosity was 72% or less, and then the battery performance of Experimental Example 2 was evaluated with these batteries. In addition, as shown in Table 1, it can be confirmed that the positive electrodes according to Examples have superior surface uniformity compared to Comparative Examples. Specifically, it can be seen that in the case of Comparative Example 2, even though the initial porosity is 72%, the arithmetic mean roughness exceeds 5 *µ*m and the maximum height roughness exceeds 60 *µ*m, indicating that the surface uniformity is not good. In addition, it can be confirmed that in the cases of Comparative Examples 3 and 7, although the initial porosity is 72% or less, the performance of the battery is inferior as will be described later.

### Experimental Example 2. Evaluation of battery performance

For the batteries manufactured in the Examples and the Comparative Examples, the capacity and lifetime characteristics were evaluated using a charging/discharging measuring device.

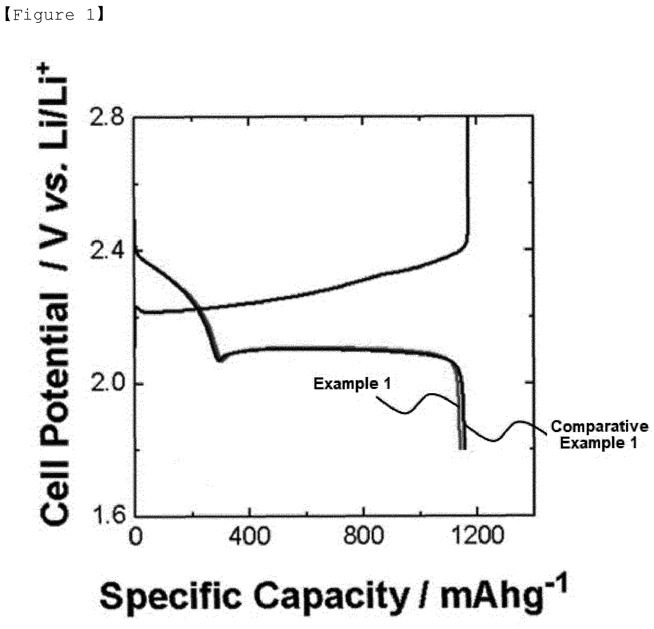

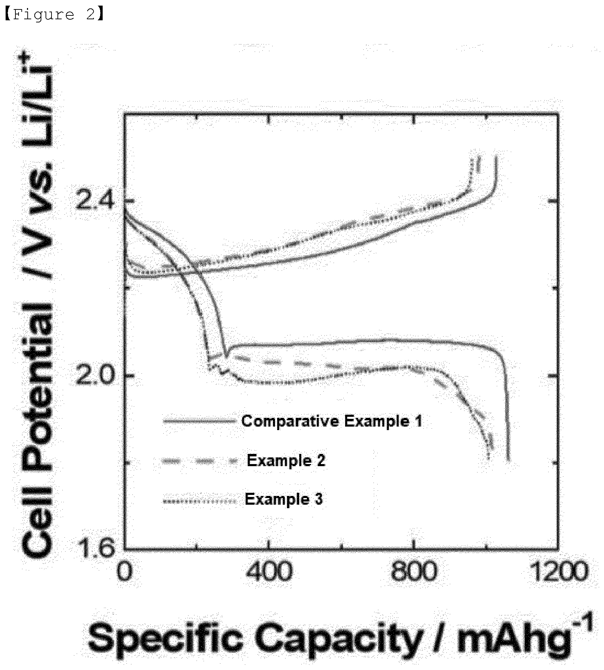

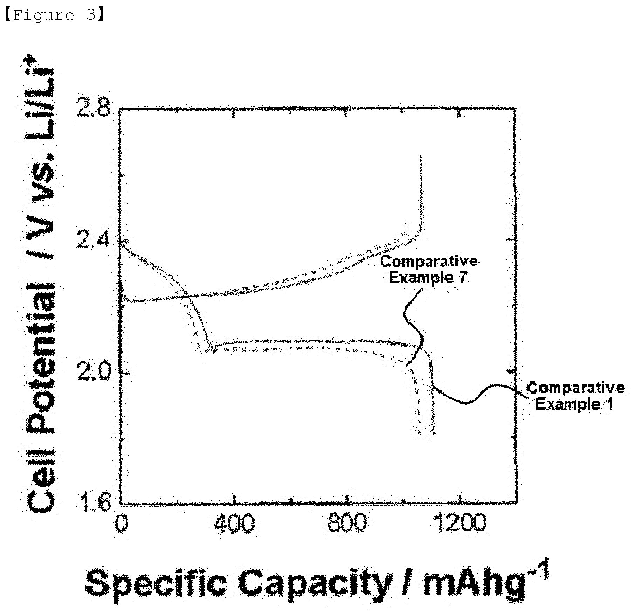

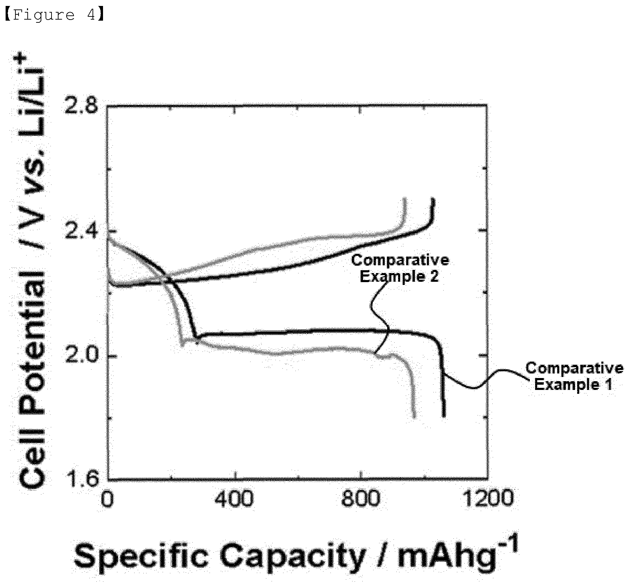

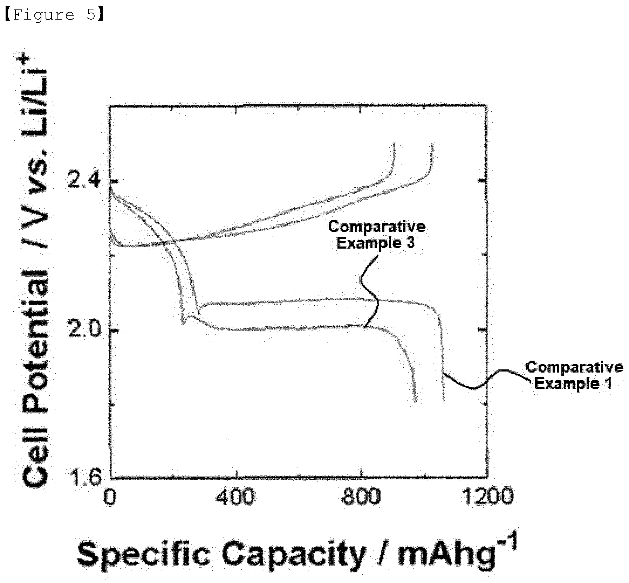

Specifically, the battery was discharged to 1.8 V at a current density of 0.1 C at 25°C, and charged at 2.5 V at a current density of 0.1 C to evaluate the capacity characteristics of the battery. The results obtained at this time are shown in FIGs. 1 to 5.

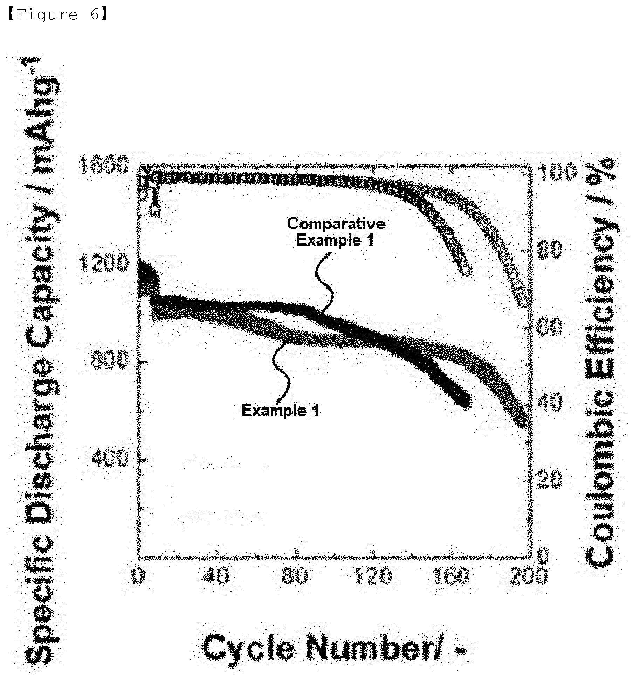

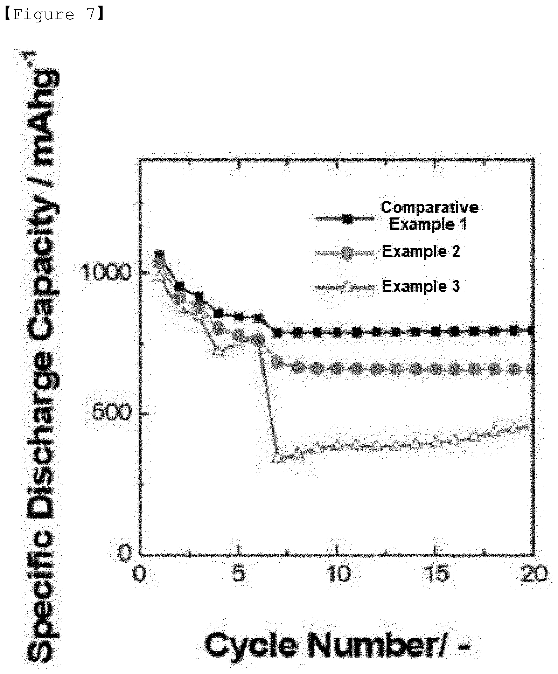

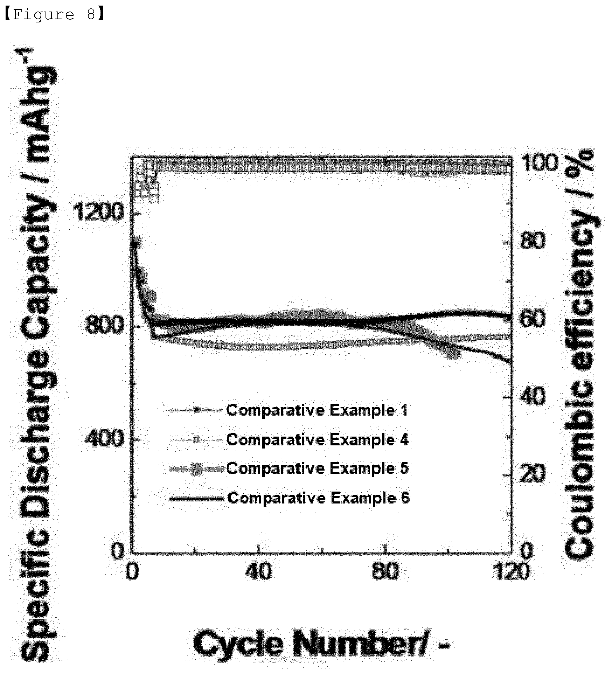

In addition, after repeating the process of discharging to 1.8 V at 25 ° C at a current density of 0.1 C and charging to 2.5 V at a current density of 0.1 C for 3 cycles and then charging and discharging at a current density of 0.2 C for 3 cycles in the same voltage section, the lifetime characteristics of the battery were evaluated wile discharging at a current density of 0.3 C and charging at a current density of 0.2 C. The results obtained at this time are shown in FIGs. 6 to 8.

From FIGs. 1 to 5, it can be seen that the battery of Example 1 has excellent electrochemical reactivity despite the low porosity, and thus exhibits a discharging capacity similar to Comparative Example 1 (one type of sulfur-carbon composite is used as a positive electrode active material) using a conventional positive electrode. On the other hand, it can be seen that in the case of Examples 2 and 3 with different weight ratios of the two sulfur-carbon composites, and Comparative Example 7 using the second sulfur-carbon composite containing the second carbon material with a specific surface area of less than 600 m²/g, the discharging capacities are decreased due to the increase in resistance. Also, it can be seen that in the cases of Comparative Examples 2, 3 and 7, although the porosity of the positive electrodes is less than 72%, an overvoltage phenomenon occurs due to the increase in resistance by the increased density, and thus the discharging capacity is decreased.

Also, from FIGs. 6 to 8, it can be seen that the battery according to Example 1 has superior lifetime characteristics compared to other Examples and Comparative Examples. Specifically, it can be seen that in the case of Examples 2 and 3, the lifetime characteristics are very poor as compared to Comparative Example 1, and in the case of Comparative Example 4, the lifetime is maintained at a similar level, but the discharging capacity is reduced. In addition, it can be confirmed that in the case of Comparative Examples 5 and 6, the discharging capacity is similar to that of Comparative Example 1, but is early deteriorated and thus the lifetime characteristic is inferior.

From these results, it can be seen that by incorporating two types of sulfur-carbon composite containing carbon materials having different shapes and specific surface areas, respectively, as a positive electrode active material, the electrochemical reactivity and stability of the positive electrode are improved, and thus the capacity and lifetime characteristics of the lithium-sulfur battery are improved. In particular, it can be confirmed that the mixing ratio of the two types of sulfur-carbon composite is an important factor to secure the effect of improving the lifetime characteristics.

## Claims

1. A positive electrode for a lithium-sulfur battery comprising a positive electrode current collector and a positive electrode active material layer positioned on at least one surface of the positive electrode current collector,
wherein the positive electrode active material layer comprises a first sulfur-carbon composite comprising a first carbon material and sulfur, and a second sulfur-carbon composite comprising a second carbon material and sulfur,
the first carbon material and the second carbon material have different shapes,
the first carbon material has a specific surface area of 200 m²/g to 400 m²/g, and
the second carbon material has a specific surface area of 600 m²/g to less than 1000 m²/g.

2. The positive electrode for the lithium-sulfur battery according to claim 1, wherein the first carbon material has a specific surface area of 200 m²/g to 300 m²/g.

3. The positive electrode for the lithium-sulfur battery according to claim 1, wherein the first carbon material has an average particle diameter (D₅₀) of 20 *µ*m to 70 *µ*m**.**

4. The positive electrode for the lithium-sulfur battery according to claim 1, wherein the second carbon material has a specific surface area of 600 m²/g to 950 m²/g.

5. The positive electrode for the lithium-sulfur battery according to claim 1, wherein each of the first carbon material and the second carbon material comprises at least one selected from the group consisting of graphite, graphene, carbon black, carbon nanotubes, carbon fibers, graphite, and activated carbon.

6. The positive electrode for the lithium-sulfur battery according to claim 1, wherein the sulfur comprises at least one selected from the group consisting of inorganic sulfur, Li₂Sₙ(n≥1), a disulfide compound, an organic sulfur compound and a carbon-sulfur polymer ((C₂Sₓ)ₙ, x=2.5 to 50, n≥2).

7. The positive electrode for the lithium-sulfur battery according to claim 1, wherein a weight ratio of the first sulfur-carbon composite and the second sulfur-carbon composite is 90:10 to 50:50.

8. The positive electrode for the lithium-sulfur battery according to claim 7, wherein the weight ratio of the first sulfur-carbon composite and the second sulfur-carbon composite is 80:20 to 60:40.

9. The positive electrode for the lithium-sulfur battery according to claim 7, wherein the weight ratio of the first sulfur-carbon composite and the second sulfur-carbon composite is 75:25 to 70:30.

10. The positive electrode for the lithium-sulfur battery according to claim 1, wherein the sulfur is contained in an amount of 60 to 90% by weight based on 100% by weight of the total weight of the positive electrode active material layer.

11. The positive electrode for the lithium-sulfur battery according to claim 1, wherein a porosity of the positive electrode active material layer is 72% or less based on the total volume of the positive electrode active material layer.

12. The positive electrode for the lithium-sulfur battery according to claim 11, wherein the porosity of the positive electrode active material layer is 68 % to 72 % based on the total volume of the positive electrode active material layer.

13. The positive electrode for the lithium-sulfur battery according to claim 1, wherein the positive electrode active material layer has an arithmetic mean roughness (Sa) of 5 ***µ*m** or less, and a maximum height roughness (Sz) of 60 ***µ*m** or less.

14. A lithium-sulfur battery comprising,
the positive electrode for the lithium-sulfur battery according to claim 1;
a negative electrode; and
an electrolyte.
